# EUROPEAN PATENT SPECIFICATION

(11) **EP 2 734 730 B1**
(45) Date of publication and mention of the grant of the patent: **04.01.2017**
(21) Application number: 12737465.0
(22) Date of filing: 21.06.2012
(51) Int. Cl.: F04B 35/04, F04B 39/10, F16F 1/32

(54) **LEAF SPRING AND COMPRESSOR WITH LEAF SPRING**
BLATTFEDER UND VERDICHER MIT BLATTFEDER
RESSORT À LAMES ET COMPRESSEUR AVEC UN RESOORT À LAMES

(30) Priority: 19.07.2011 BR PI1103447
(43) Date of publication of application: 28.05.2014
(73) Proprietor: Whirlpool S.A., 04578-000 São Paulo - SP (BR)
(72) Inventor: ROMAN, Alisson Luiz, Costa e Silva 89219-320 Joinville SC (BR); TAKEMORI, Celso Kenzo, Atiradores 89203-040 Joinville - SC (BR); VOLLRATH, Ingwald, Pirabeiraba 89239-100 Joinville - SC (BR); COUTO, Paulo Rogerio Carrara, Boa Vista 89206-500 Joinville SC (BR)
(74) Representative: Soldatini, Andrea
(86) International application number: PCT/BR2012/000209
(87) International publication number: WO 2013/010234

(56) References cited:
- WO-A1-02/066854
- DE-A1- 19 534 818
- DE-A1-102005 038 783
- US-A- 3 462 136
- US-A- 3 786 834
- US-A- 4 044 628

## Description

### Field of the Invention

The present invention relates to compressor leaf springs, in particular, linear compressor leaf springs, and a compressor provided with leaf springs, in particular, a linear compressor that is provided with at least two leaf springs cooperatively disposed at least one of the linear compressor mechanisms.

### Background of the Invention

As it is well known to those skilled in the art, a compressor comprises a mechanical (or electromechanical) device capable of raising the pressure of a particular working fluid, so that said working fluid, once "pressurized", can be used in different applications.

Among the types of compressor belonging to the current state of the art, it is known the reciprocating compressors. Such compressors are capable of raising the pressure of a working fluid by changing volume of a "chamber" where the mentioned working fluid is temporarily disposed. In this sense, reciprocating compressors uses a cylinder-piston assembly for promoting the volumetric change of the "chamber" where said working fluid is temporarily disposed, the inner portion of the cylinder defining itself such chamber, whose inner volume is changed as the piston is displaced, which moves axially within said cylinder. The piston movement is normally imposed by a driving source, which is normally defined by an electric motor.

In general, the type of electric motor to be used in a reciprocating compressor ends up defining the compressor nomenclature. In this regard, linear compressors are known which are based on linear electric motors (motor composed of a static stator and an axially dynamic cursor).

It is further known to those skilled in the art that linear compressors can also be based on resonant oscillatory mechanisms (resonant spring-mass assembly). A linear compressor based on resonant oscillating mechanisms, as defined in specialized literature and patent documents (for example, document BRP10601645) includes a linear motor and a piston, both functionally interconnected to each other through a resonant spring.

In this sense, the state of the art also provides working examples of linear compressor based on resonant oscillating mechanisms. One of those examples is described in a Brazilian document BRP11005184. This document discloses a compressor comprising a resonant oscillating assembly (functional arrangement consisting of linear motor, resonant spring and piston) arranged within an intermediate body (capable of providing axial flexibility to the resonant oscillating assembly). Further according to this document, the resonant oscillating assembly is fastened to the intermediate body by means of a fastening element. It was further noticed that the resonant oscillating assembly has its radial positioning (within the intermediate body) defined by at least one positioner element (flat spring) aligned with the said oscillating resonant assembly and the intermediate body. The positioner element (flat spring) as defined in this document comprises a body consisting of two rings (having different diameters) concentrically arranged and interconnected to each other by at least one connection extension. In this case, the "outer" ring is fastened to the intermediate body and the "inner" ring is fastened to the resonant spring.

Of course, this type of flat spring comprises is just an exemplification, that is, the present state of the art further provides other models and constructions of flat springs.

The current state of the art also provides flat leaf springs, which may or may not be used together or as substitution for flat springs and in similar applications (in order to ensure the radial positioning / alignment between a resonant oscillating assembly and an intermediate body (or shell) of a linear compressor.

An example of a leaf spring (not necessarily used in linear compressors) is described in document US 3,786,834. This document provides a leaf spring comprised of flat springs and spacers arranged between the flat springs. In this case, the spacers comprise a shape that is basically analogous to the shape of flat springs, and have the function of transmitting movement from one spring to another, acting as a sort of physical connector therebetween.

Another example of beam spring (not necessarily used in linear compressors) is described in document US 5,415,587. This document provides a leaf spring also comprised of flexible disks and spacers arranged between the flexible disks. In this case, said spacers have only the function of attenuating vibration between flexible disks, and therefore, they are likely to present oscillatory movements relative to the flexible disks.

Yet another example of leaf spring is described in document US 3,462,136. This document reveals a leaf spring comprised of flat springs, said flat springs comprised by inner and outer rings and spokes arranged in such way that provide radial spacing between said inner and outer rings of the same flat spring.

Moreover, document DE-A-102005038783 discloses a linear compressor comprising a piston capable of being reciprocally displaced inside a cylinder, a linear motor acting on the piston and a resonance springs arrangement, wherein said resonance springs arrangement comprises a plurality of flat springs stacked to one another, each flat spring defined by a flat plate provided with a basically spiral slit, which allows said flat springs to displace its inner regions relatively to its outer regions. However, document DE-A-102005038783 does not reveal connection extensions free of physical contact due to spacers disposed between adjacently arranged flat springs.

The current state of the art also comprises different types of flat leaf springs; however (and as well as the two examples recited above), most of those types of leaf springs is not able to replace the flat springs used in linear compressors. This impossibility is due main-ly to two reasons, namely:

Such exemplifications of leaf springs are unable to ensure the radial rigidity that is necessary for the correct functioning of the resonant oscillatory assembly, that is, they are unable to ensure the radial positioning between resonant oscillating assembly and an intermediate body (or shell) of a linear compressor.

Such leaf springs have configurations that allow to integrally (or semi-integrally) contact resilient regions of a spring with the other resilient regions of other spring. Thus, those settings allow the flat springs, when in a state of maximum compression, to be capable of blocking (condition where the "links" of a spring (or a leaf springs) are physically contacted to each other, substantially changing the resilient characteristics of the assembly), this characteristic being highly undesirable in applications related to oscillatory movements, such as the linear compressors.

Therefore, the current state of the art does not provide leaf springs that may be used in linear compressors, in particular, in linear compressors based on resonant oscillatory mechanisms.

### Objects of the Invention

Thus, it is one of the objects of the present invention to provide a leaf springs that may be applied in linear compressors based on resonant oscillatory mechanisms.

Therefore, it is another object of the present invention to provide a leaf springs capable of ensuring the radial positioning of the resonant oscillatory assembly of a linear compressor relative to the shell (or intermediate body) thereof.

It is further another object of the present invention to provide a leaf spring whose spacers mechanically isolate resilient portions of two adjacently arranged flat springs (and, naturally, spaced from each other by one of those spacers).

It is also another object of this invention to disclose a leaf spring that may enable size reduction of a linear compressor, in particular, the overall diameter of the linear compressor.

### Summary of the Invention

These and other objects of the invention disclosed herein are fully achieved by means of leaf springs for compressor disclosed herein.

Said compressor leaf springs comprises at least a spacer arranged between at least a pair of flat springs, each flat spring being comprised of at least one outer ring, at least one inner ring and at least one connection extension capable of connecting a an outer ring to an inner ring.

According to the present invention, the leaf springs reported herein comprises at least one section of physical contact between at least a pair of outer rings defined by at least one second spacer, at least one section of physical contact between at least one pair of inner rings defined by at least one first spacer and at least one section free of physical contact between at least two adjacently arranged connection extensions. Preferably, two adjacently arranged connection extensions are entirely free of physical contact with each other. Still preferably, the connection extensions of a pair of flat springs adjacently arranged are parallel, and a flat spring comprises, essentially, three connection extensions.

Further according to the present invention, the spacers comprises a body that is essentially annular. Moreover, each spacer is comprised by a first (inner) spacer and a second (outer) spacer, wherein the second spacer has dimensions that are analogous to the dimensions of the outer ring of the flat spring, and the first spacer has dimensions that are analogous to the dimensions of the inner ring of the flat spring.

The present invention also comprises a compressor provided with the flat leaf springs (recited above), which relates to a compressor preferably based on a resonant oscillating mechanism comprising at least two leaf springs arranged on at least one of distal ends of the shell. Preferably, it is provided at least one leaf spring arranged on each of the distal ends of the shell.

Optionally, it is provided a compressor provided with the flat leaf springs (recited above), which relates to a compressor preferably based on a resonant oscillating mechanism comprising at least two leaf springs arranged on at least one of distal ends of its intermediate body. Preferably, it is provided at least one leaf spring arranged on each of the distal ends of its intermediate body.

### Brief Description of the Figures

The present invention will be described in details based on the figures listed herein below, wherein:
Figure 1 illustrates a flat spring (according to the invention), in a perspective view;
Figure 2 illustrates the leaf springs (according to the invention), in a perspective view;
Figure 3 illustrates the flat leaf springs (according to the invention), in a exploded view;
Figure 4 illustrates a schematic cut view of flat leaf springs (according to the invention); and
Figure 5 illustrates, in schematic cut view, an example of a compressor provided with leaf springs (according to the invention).

### Detailed Description of the Invention

According to the concepts and objects of the present invention, the present invention discloses a leaf springs 1 capable of incorporating a compressor - based on a resonant oscillating mechanism - mainly comprised of flat springs adjacently arranged and spaced from each other by spacers, each pair of flat spring providing a spacer between at least two springs that integrate the pair.

Also according to the present invention, each of the flat springs defines two supporting regions and an axially resilient region, only the supporting regions of the flat springs being "interconnected" to each other. Thus, axially resilient regions of a flat spring (when the same are associated with each other, conforming the leaf springs itself) will not exhibit any type of physical contact with axially resilient regions of other flat springs adjacently disposed.

This concept avoids that, at full load deformation, the leaf springs is subject to blocking, since the axially resilient regions are free.

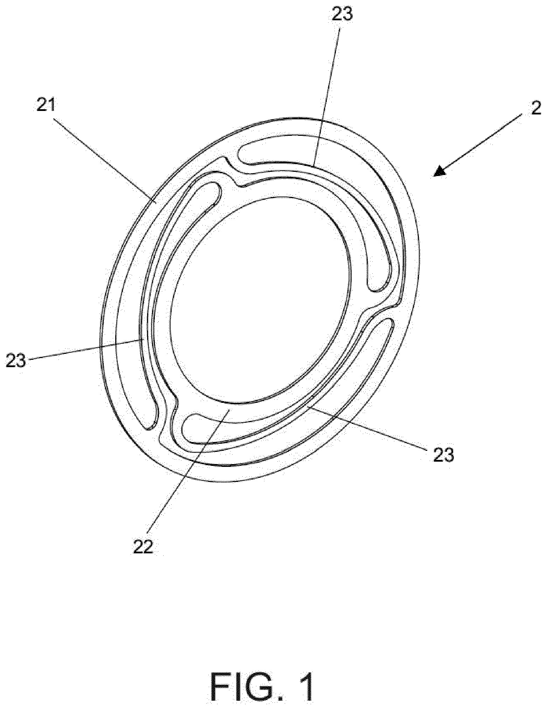

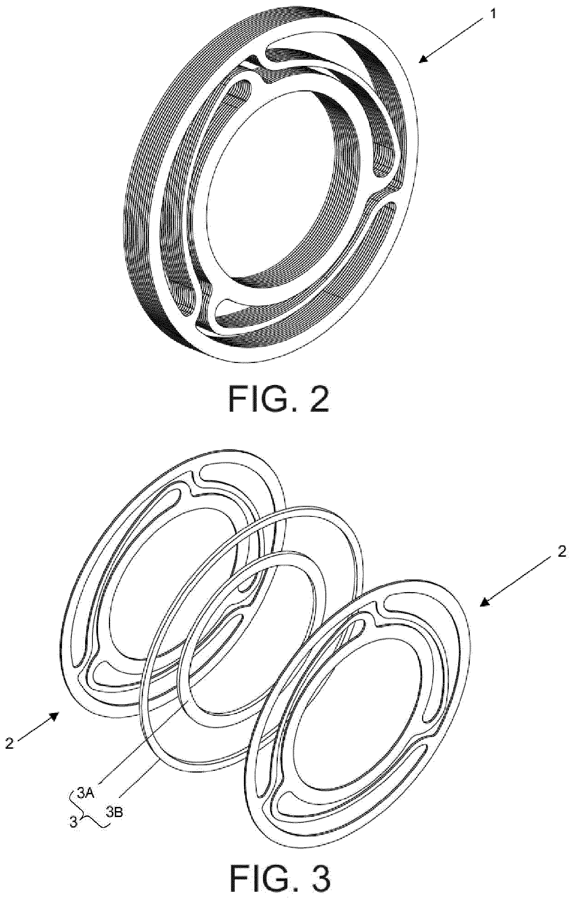

Figures 1, 2, 3 and 4 illustrate a preferred construction of the leaf springs 1.

According to those figures, it is ascertained that said leaf springs 1 comprises a second plurality of flat springs, which are spaced from each other by spacers 3.

Still according to this preferred construction, each flat spring 2 comprises an outer ring 21, an inner ring 22 and three connection extensions 23. In this context, both the outer ring 21 and the inner ring 22 comprise simplified annular bodies, which are interconnected by three extensions 23. Each of the extensions 23 - which are equidistantly arranged - comprises a type of projection of an essentially semi-circular perimeter having arched distal ends. Preferably, each of the flat springs 2 integrating the leaf spring 1 is made of a metal alloy.

This construction enables a single flat spring 2 to be capable of axial flexibility, that is, the rings 21 and 22 can move axially (relative to one another), this movement resulting from resilient deformation (in an axial direction) of the extension structures 23.

Also according to the preferable construction of the present invention, each of the spacers 3 comprises a simplified and essentially annular body. Spacers are provided in two different dimensions (perimeters). Therefore, it is provided second (outer) spacers 3B having dimensions that are analogous to the dimensions of the outer ring 21 of the flat spring 2, and it is provided first (inner) spacers 3A having dimensions that are analogous to the dimensions of the inner ring 22 of the flat spring 2. Also preferably, the spacers 3 are made of metal alloy.

Due to this construct, at least two flat springs 2 are interconnected to each other in parallel by means of two spacers 3.

Second spacer 3B is arranged between two outer rings 21 of flat springs 2 arranged in parallel. Thus, this second spacer 3B ends up defining the physical contact between (at least a section) of a pair of outer rings 21.

First spacer 3A is arranged between two inner rings 22 of flat springs 2 arranged in parallel. Thus, this first spacer 3 ends up defining the physical contact between (at least a section) of a pair of inner rings 22.

Therefore, the spacers 3 ends up defining contact sections or areas (between two parallel and / or adjacent flat springs 2) only where it is important to have contact sections or areas, since the connection extensions 23 of the flat springs 2 are free from each other, that is, the connection extensions 23 do not provide physical contact with the adjacent connection extensions 23, therefore avoiding any "blocking".

Preferably, the first spacers 3A (located between the inner rings 22) are fastened by pressure between the flat springs 2, in particular during some assembling steps of the other elements integrating the linear compressor (during the process of inserting the elements that will accomplish joining connecting-rod and magnet to the resonant spring).

Also preferably, the second spacers 3B (located between the outer rings 21) are fastened by pressure between the flat springs 2, in particular during some steps of assembling the other elements integrating the linear compressor (when the resonant assembly is positioned within the shell and the whole mechanism is pressed).

The present invention further comprises preferable constructs of linear compressors based on oscillating resonant mechanisms that are provided with leaf springs 1.

In general, a leaf spring 1 - when properly associated with a compressor of this type - has as a main goal to keep the radial alignment of the resonant mechanism (resonant spring, linear motor, and cylinder-piston assembly) within the compressor shell, or, further, within an intermediate element (element described in the Brazilian document BRPI1005184.

According to the concepts of the present invention, the flat spring 2 of one of the distal ends of the leaf spring 1 has its inner ring 22 physically coupled to one end of the resonant spring of the oscillating resonant assembly of the compressor. The outer ring 21 of this same flat spring 2 is physically coupled to one of the distal ends of the compressor shell, or further, to one of the distal ends of the intermediate element of the compressor (if applicable).

Preferably, another leaf springs 1 is also associated with the distal ends that are opposing the compressor (of the resonant spring and the shell - or intermediate element -).

As the inner rings 22 are capable of axially moving relative to the bigger rings 21, the leaf springs 1 allow the compressor resonant spring to "expand" and "shrink" without difficulty, while the compressor shell (or intermediate element) remains static.

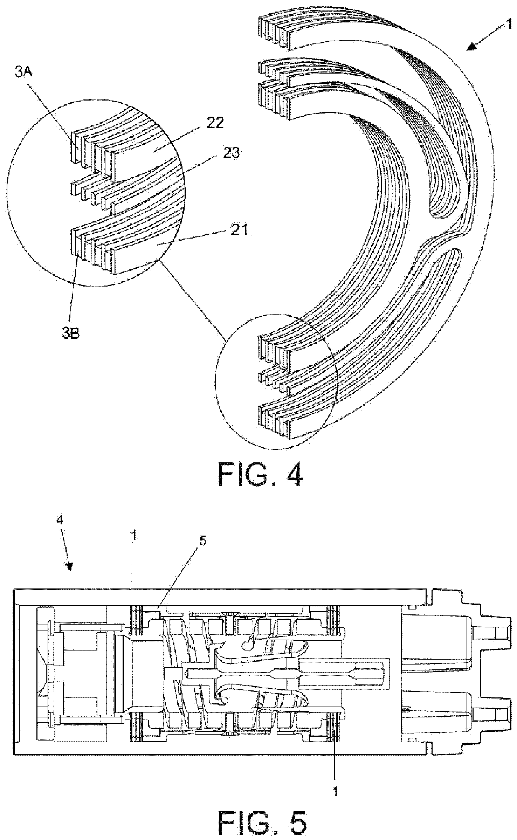

Figure 5 illustrates an example of a linear compressor 4 provided with a leaf springs 1, which connect the ends of the resonant spring to the ends of the intermediate element 5.

Having described examples of embodiments of the subject matter of the present invention, it is clear that the scope thereof encompasses other possible variations (especially configurative variations of flat springs integrating the herein treated leaf springs), which are limited only by the content of the set of claims, being further included therein the possible equivalent means.

## Claims

1. Reciprocating compressor provided with leaf springs (1) comprising at least one spacer (3) disposed between at least a pair of flat springs (2), each flat spring (2) being comprised by at least one outer ring (21), at least one inner ring (22) and at least one connection extension (23) capable of connecting an outer ring (21) to an inner ring (22); the leaf springs (1) being especially **CHARACTERIZED in that** it comprises:
at least one section of physical contact between at least a pair of outer rings (21) defined by at least one spacer (3);
at least one section of physical contact between at least a pair of inner rings (22) defined by at least one spacer (3);
and at least one section free of physical contact between at least two connection extensions (23) adjacently arranged;
wherein each spacer (3) is comprised by a first spacer (3A) which has analogous dimensions to the dimensions of the inner ring (22) and a second spacer (3B) which has analogous dimensions to the dimensions of the outer ring (21).

2. Reciprocating compressor, according to claim 1, **CHARACTERIZED in that** two connection extensions (23) adjacently arranged are fully free of physical contact between each other.

3. Reciprocating compressor, according to claim 1, **CHARACTERIZED in that** the spacer (3) comprises essentially annular bodies.

4. Reciprocating compressor, according to claim 1, **CHARACTERIZED in that** connection extensions (23) of a pair of flat springs (2) adjacently arranged are parallel.

5. Reciprocating compressor, according to claim 1, **CHARACTERIZED in that** the flat spring (2) essentially comprises three connection extensions (23).

6. Reciprocating compressor, according to any of claims 1 to 5, **CHARACTERIZED in that** said reciprocating compressor is based on a resonant oscillating mechanism;

7. Reciprocating compressor, according to claim 6, **CHARACTERIZED in that** it comprises at least one leaf spring (1) arranged on at least one distal end of a compressor (4).

8. Reciprocating compressor, according to claim 7, **CHARACTERIZED in that** it comprises at least one leaf spring (1) arranged at each one of distal ends of the compressor (4).

9. Reciprocating compressor, according to any of claims 1 to 8, **CHARACTERIZED in that** it comprises at least one leaf spring (1) arranged on at least one distal end of a intermediate body (5) of the compressor (4).

10. Reciprocating compressor, according to claim 9, **CHARACTERIZED in that** it comprises at least one leaf spring (1) arranged at each one of distal ends of the intermediate body (5) of the compressor (4).

## Patentansprüche

1. Kolbenkompressor, der mit Blattfedern (1) versehen ist, die wenigstens einen Abstandhalter (3) enthalten, der zwischen wenigstens einem Paar von Flachfedern (2) angeordnet ist, wobei jede Flachfedern (2) von wenigstens einem Außenring (21), wenigstens einem Innenring (22) und wenigstens einer Verbindungserweiterung (23) eingeschlossen ist, die geeignet ist, einen Außenring (21) mit einem Innenring (22) zu verbinden; wobei die Blattfedern (1) insbesondere **dadurch GEKENNZEICHNET sind, dass** sie enthalten:
wenigstens eine durch wenigstens einen Abstandhalter (3) definierte Sektion mit physikalischem Kontakt zwischen wenigstens einem Paar von Außenringen (21);
wenigstens eine durch wenigstens einen Abstandhalter (3) definierte Sektion mit physikalischem Kontakt zwischen wenigstens einem Paar von Innenringen (21);
und wenigstens eine Sektion, die frei von physikalischem Kontakt zwischen wenigstens zwei Verbindungserweiterungen (23) ist, die benachbart angeordnet sind;
wobei jeder Abstandhalter (3) durch einen ersten Abstandhalter (3A), der analoge Dimensionen zu dem Dimensionen des Innenrings (22) hat, und einem zweiten Abstandhalter (3B) gebildet ist, der analoge Dimensionen zu dem Dimensionen des Außenrings (21) hat.

2. Kolbenkompressor nach Anspruch 1, **dadurch GEKENNZEICHNET, dass** zwei Verbindungserweiterungen (23), die benachbart angeordnet sind, vollständig frei von physikalischem Kontakt untereinander sind.

3. Kolbenkompressor nach Anspruch 1, **dadurch GEKENNZEICHNET, dass** der Abstandhalter (3) im Wesentlichen ringartige Körper enthält.

4. Kolbenkompressor nach Anspruch 1, **dadurch GEKENNZEICHNET, dass** Verbindungserweiterungen (23) eines Paares von benachbart angeordneten Flachfedern (2) parallel sind.

5. Kolbenkompressor nach Anspruch 1, **dadurch GEKENNZEICHNET, dass** die Flachfeder (2) im Wesentlichen drei Verbindungserweiterungen (23) enthält.

6. Kolbenkompressor nach einem der Ansprüche 1 bis 5, **dadurch GEKENNZEICHNET, dass** der Kolbenkompressor auf einem resonant oszillierenden Mechanismus basiert.

7. Kolbenkompressor nach Anspruch 6, **dadurch GEKENNZEICHNET, dass** er wenigstens eine Blattfeder (1) enthält, die an wenigstens einem distalen Ende eines Kompressors (4) angeordnet ist.

8. Kolbenkompressor nach Anspruch 7, **dadurch GEKENNZEICHNET, dass** er wenigstens eine Blattfeder (1) enthält, die an jedem der distalen Enden des Kompressors (4) angeordnet ist.

9. Kolbenkompressor nach einem der Ansprüche 1 bis 8, **dadurch GEKENNZEICHNET, dass** er wenigstens eine Blattfeder (1) enthält, die an wenigstens einem distalen Ende eines Zwischenkörpers (5) des Kompressors (4) angeordnet ist.

10. Kolbenkompressor nach Anspruch 9, **dadurch GEKENNZEICHNET, dass** er wenigstens eine Blattfeder (1) enthält, die an jedem der distalen Enden des Zwischenkörpers (5) des Kompressors (4) angeordnet ist.

## Revendications

1. Compresseur alternatif muni de ressorts à lames comprenant au moins une entretoise (3) disposée entre au moins une paire de ressorts plats (2), chaque ressort plat (2) étant constitué d'au moins un anneau extérieur (21), d'au moins un anneau intérieur (22) et d'au moins une extension de connexion (23) apte à connecter un anneau extérieur (21) à un anneau intérieur (22) ; les ressorts à lames (1) étant spécialement **CARACTÉRISÉS en ce qu'**ils comportent :
au moins une section de contact physique entre au moins une paire d'anneaux extérieurs (21) définie par au moins une entretoise (3) ;
au moins une section de contact physique entre au moins une paire d'anneaux intérieurs (22) définie par au moins une entretoise (3) ;
et au moins une section exempte de contact physique entre au moins deux extensions de connexion (23) agencées de façon adjacente ;
dans lequel chaque entretoise (3) est composée d'une première entretoise (3A) qui a des dimensions analogues aux dimensions de l'anneau intérieur (22) et d'une seconde entretoise (3B) qui a des dimensions analogues aux dimensions de l'anneau extérieur (21).

2. Compresseur alternatif, selon la revendication 1, **CARACTÉRISÉ en ce que** deux extensions de connexion (23) agencées de façon adjacente sont entièrement exemptes de contact physique entre elles.

3. Compresseur alternatif, selon la revendication 1, **CARACTÉRISÉ en ce que** l'entretoise (3) comporte essentiellement des corps annulaires

4. Compresseur alternatif, selon la revendication 1, **CARACTÉRISÉ en ce que** les extensions de connexion (23) d'une paire de ressorts plats (2) agencées de façon adjacente sont parallèles.

5. Compresseur alternatif selon la revendication 1, **CARACTÉRISÉ en ce que** le ressort plat (2) comporte essentiellement trois extensions de connexion (23).

6. Compresseur alternatif, selon l'une quelconque des revendications 1 à 5, **CARACTÉRISÉ en ce que** ledit compresseur alternatif est basé sur un mécanisme oscillant à résonance.

7. Compresseur alternatif, selon la revendication 6, **CARACTÉRISÉ en ce qu'**il comporte au moins un ressort à lames (1) agencé sur au moins une extrémité distale d'un compresseur (4).

8. Compresseur alternatif, selon la revendication 7, **CARACTÉRISÉ en ce qu'**il comporte au moins un ressort à lames (1) disposé à chacune des extrémités distales du compresseur (4).

9. Compresseur alternatif, selon l'une quelconque des revendications 1 à 8, **CARACTÉRISÉ en ce qu'**il comporte au moins un ressort à lames (1) agencé à au moins une extrémité distale d'un corps intermédiaire (5) du compresseur (4).

10. Compresseur alternatif, selon la revendication 9, **CARACTÉRISÉ en ce qu'**il comporte au moins un ressort à lames (1) agencé à chacune des extrémités distales du corps intermédiaire (5) du compresseur (4).
